# EUROPÄISCHE PATENTSCHRIFT

(11) **EP 0 994 761 B1**
(45) Veröffentlichungstag und Bekanntmachung des Hinweises auf die Patenterteilung: **21.11.2001**
(21) Anmeldenummer: 98940122.9
(22) Anmeldetag: 03.07.1998
(51) Int. Cl.: B23Q 7/10

(54) **REGAL**
SHELVING
RAYONNAGE

(30) Priorität: 09.07.1997 DE 19729372
(43) Veröffentlichungstag der Anmeldung: 26.04.2000
(73) Patentinhaber: Wolter, Michael, 80939 München (DE)
(72) Erfinder: Wolter, Michael, 80939 München (DE)
(74) Vertreter: Grättinger & Partner (GbR)
(86) Internationale Anmeldenummer: EP9804106
(87) Internationale Veröffentlichungsnummer: WO9902300

(56) Entgegenhaltungen:
- WO-A-92/18400
- DE-A- 3 632 448
- DE-A- 3 643 867
- DE-A- 4 424 008
- FR-A- 2 692 699
- US-A- 3 670 386
- US-A- 3 908 800
- US-A- 4 821 197
- PATENT ABSTRACTS OF JAPAN vol. 10, no. 360 (M-541) [2417], 3. Dezember 1986 & JP 61 155104 A (TOSHIBA CORP.), 14. Juli 1986

## Beschreibung

Die vorliegende Erfindung betrifft ein Regal mit einer Mehrzahl von Fächern, die jeweils eine auf der Stirnseite des Regals angeordnete Zugriffsöffnung aufweisen, wobei eine optische Senoren umfassende Meldeeinrichtung zur Identifizierung des Zugriffs auf die einzelnen Fächer vorgesehen ist.

Derartige Regale sind in Industriebetrieben insbesondere im Bereich der Endmontage weit verbreitet. In den einzelnen Fächern werden einzelne Bauteile des zu fertigenden Erzeugnisses vorgehalten. Häufig ist dabei im Rahmen von elektronisch gesteuerten und überwachten Fertigungsabläufen jedem einzelnen Fach des Regals eine optische Signaleinrichtung zugeordnet, welche anzeigt, aus welchem Fach für das gerade zu fertigende Erzeugnis das zu dem betreffenden Zeitpunkt zu montierende Bauteil zu entnehmen ist. Gemäß der DE 3643867 C2 soll dabei die Steuerung bzw. Betätigung der optischen Signaleinrichtungen automatisch unter Verwendung einer dem einzelnen Fahrzeug zugeordneten, maschinenlesbaren Codiereinrichtung erfolgen. Über die optische Sensoren umfassende Meldeeinrichtung wird dann überprüft, ob tatsächlich aus dem gekennzeichneten Fach ein Bauteil entnommen wurde oder nicht oder aber ob ggf. aus einem anderen Fach ein (falsches) Bauteil entnommen wurde. In dem zuletzt genannten Fall wird eine Fehlermeldung ausgelöst, beispielsweise in Form eines akustischen Fehlersignals. Als Alternative zu dieser - gattungsgemäßen - Form der Kontrolle wird in der DE 2620732 B1 vorgeschlagen, eine an jedem zu montierenden Einzelteil angebrachte maschinenlesbare Information vor dem Einbau des betreffenden Teils automatisch abzutasten und mit einer - ebenfalls maschinenlesbaren - Gesamtinformation zu vergleichen, die sämtliche relevanten Daten des betreffenden Fahrzeugs enthält und an zentraler Stelle angebracht wird. Ergibt der Vergleich eine Unverträglichkeit, so wird die Montage unterbrochen.

All die vorstehend dargelegten Bemühungen erfolgen vor dem Hintergrund, daß das nachträgliche Entfernen eines einmal montierten falschen Bauteils (z.B. Kabelstrang) und dessen Austausch gegen ein richtiges Bauteil um ein vielfaches teurer ist als eben jene Maßnahmen, welche sicherstellen sollen, daß von Anfang an das richtige Bauteil montiert wird. Dieses Problem ist vor allem vor dem Hintergrund zu sehen, daß in Industriebetrieben zunehmend dazu übergegangen wird, an einer Fertigungsstraße nicht nur identische Erzeugnisse zu montieren, sondern vielmehr verschiedene Erzeugnisse und/oder Erzeugnisse mit unterschiedlichen Ausstattungsdetails. Dabei kam es in der Vergangenheit immer wieder dazu, daß von den für verschiedene Erzeugnisse in einem Regal bereitgehaltenen ähnlich aussehenden Bauteilen das falsche montiert wurde.

Bekannte gattungsgemäße Regale weisen Meldeeinrichtungen auf, bei denen jedem Fach gesonderte optische Sensoren zugeordnet sind. Verbreitet ist dabei die Anordnung zweier Reihen von aufeinander ausgerichteten Lichtschrankenelementen längs einander gegenüberstehender Kanten der Zugriffsöffnung eines jeden Faches. Die einzelnen Lichtschrankenelemente einer jeden Reihe von ihnen sind dabei in einem Abstand zueinander angeordnet, daß es nicht möglich ist, in dem optischen "Gitter" zwischen zwei Lichtschranken hindurch in das Fach zu greifen, ohne daß dies von der Meldeeinrichtung erfaßt würde.

Derartige bekannte gattungsgemäße Regale sind, eine entsprechend fein gegliederte Meldeeinrichtung vorausgesetzt, in der Praxis durchaus brauchbar, und sie erfüllen auch den verfolgten Zweck. Sie weisen jedoch einen ganz erheblichen Nachteil auf. Denn eine Flexibilität hinsichtlich der Aufteilung des Regals in dem Sinne, daß die Fächeraufteilung auf einfache Weise modifiziert werden kann, ist nicht gegeben. Vielmehr muß, wenn die Fächeraufteilung geändert werden soll, die Meldeeinrichtung samt sämtlicher Sensoren nach dem Umbau neu installiert werden einschließlich einer neuen Verkabelung.

Hieraus leitet sich die der vorliegenden Erfindung zugrundeliegende Aufgabenstellung ab, die darin besteht, ein Regal der eingangs genannten Art zu schaffen, das sich durch ein hohes Maß an Flexibilität hinsichtlich der Fächeraufteilung auszeichnet.

Gemäß der vorliegenden Erfindung wird diese Aufgabe dadurch gelöst, daß die Meldeeinrichtung mindestens einen optischen Distanzscanner, dessen Meßbereich sich vor der Stirnseite des Regals über eine Mehrzahl von Zugriffsöffnungen erstreckt, und eine Auswerteschaltung mit einer Speichereinheit für die Koordinaten der überwachten Zugriffsöffnungen und einer Vergleichseinheit zum Vergleich der Koordinaten eines von dem Distanzscanner detektierten in das Meßfeld eingedrungenen Fremdkörpers einerseits und der Koordinaten der Zugriffsöffnungen andererseits umfaßt. Abweichend vom Stand der Technik, bei dem jedem einzelnen Fach optische Sensoren zugeordnet sind, wird bei dem erfindungsgemäßen Regal somit mittels mindestens eines - als solches bekannten (vgl. z.B. DE 4412044 A1 und DE 4422497 C2) - optischen Distanzscanners eine Vielzahl von Fächern überwacht, nämlich sämtliche Fächer, deren Zugriffsöffnungen innerhalb des Meßbereichs des/der optischen Distanzscanner(s) liegen. Dies ist der Schlüssel zu dem hohen Maß an Flexibilität, die das erfindungsgemäße Regal im Hinblick auf die Fächeraufteilung aufweist. Denn innerhalb des Meßbereichs des mindestens einen optischen Distanzscanners - es handelt sich dabei um einen Distanzscanner mit einem über einen Drehspiegel abgelenkten Abtaststrahl beispielsweise mit einer Abtastfrequenz von 10 Hz und einem Meßbereich mit 3 m-Radius über einen in Abtastsektoren von je 3° unterteilten Winkelbereich von 180° - läßt sich jede beliebige Facheinteilung durch einfache Trennwände realisieren. Nach einer Änderung der Fächeraufteilung des Regals brauchen lediglich die Koordinaten der Zugriffsöffnungen der einzelnen Fächer, ggf. nur der geänderten Fächer in die Speichereinheit der Auswerteschaltung eingegeben zu werden. Es entfällt der gesamte Aufwand, der bei gattungsgemäßen Regalen mit der Installation neuer Sensoren einschl. der entsprechenden Verkabelung bei einer Änderung der Fächeraufteilung des Regals verbunden ist. Die einzelnen Fächer des erfindungsgemäßen Regals lassen sich nach Belieben durch Verschieben der Trennwände vergrößern und verkleinern. Die Eingabe der (geänderten) Koordinaten der Zugriffsöffnungen der einzelnen Fächer ist dann eine Sache von wenigen Minuten und erfordert keinerlei anlagentechnischen Aufwand. Dies macht das erfindungsgemäße Regal im Hinblick auf die Flexibilität der Facheinteilung gegenüber dem Stand der Technik weit überlegen. Zudem ist das erfindungsgemäße Regal sogar kostengünstiger herstellbar als Regale nach dem Stand der Technik. Auch dies hängt insbesondere damit zusammen, daß es keiner Verkabelung von einzelnen Fächern zugeordneten Sensoren bedarf.

Zur Eingabe der Koordinaten der überwachten Zugriffsöffnungen in die Speichereinheit der Auswerteschaltung bestehen mehrere Möglichkeiten. Eine erste bevorzugte Weiterbildung der Erfindung zeichnet sich in dieser Hinsicht dadurch aus, daß der Speichereinheit eine Lehrschaltung zugeordnet ist, mittels welcher die Koordinaten der Zugriffsöffnungen ermittelbar sind. Nach der erstmaligen Errichtung des Regals und nach jeder Änderung der Fächeraufteilung wird das entsprechende Lehrprogramm aufgerufen; und nacheinander werden die Ränder der Zugriffsöffnung eines jeden Faches abgefahren, beispielsweise mittels eines Stabes. Die Lehrschaltung ordnet jedem der Fächer die Koordinaten der entsprechenden Zugriffsöffnung zu.

Etwas weniger komfortabel ist eine weitere Möglichkeit, die Koordinaten der überwachten Zugriffsöffnungen in der Speichereinheit der Auswerteschaltung abzuspeichern, nämlich die manuelle Eingabe gemessener Koordinaten der einzelnen Fächer. Dies ist insbesondere deshalb etwas aufwendiger, weil optische Distanzscanner im allgemeinen mit Polarkoordinaten arbeiten, die sich aus den gemessenen kartesischen Koordinaten nur durch - freilich auch automatisch mögliche - Umrechnung ermitteln lassen.

Eine bevorzugte Weiterbildung des erfindungsgemäßen Regals zeichnet sich dadurch aus, daß zwei optische Distanzscanner mit einander überlappenden Meßbereichen vorgesehen sind. Dies verhindert, daß in dem "Meßschatten" eines relativ nahe an nur einem vorgesehenen optischen Distanzscanner detektierten Fremdkörpers ein mit größeren Abstand zum Distanzscanner in dessen Meßbereich eindringender Fremdkörper unerkannt bleibt. Somit nimmt die Sicherheit der Überwachung des Regals zu, und eine Manipulation ist erheblich erschwert.

Die beiden Distanzscanner können dabei, wie es weiter unten im Detail erläutert ist, an demselben Rand des Regals, insbesondere am oberen Rand angeordnet sein. Diese Anordnung erweist sich als günstig insbesondere bei relativ kleinen Regalen und/oder der Verwendung von Distanzscannern mit relativ geringer Reichweite. Eine bevorzugte Weiterbildung der Erfindung, die insbesondere bei großen Regalen und/oder bei der Verwendung von Distanzscannern mit großer Reichweite (z.B. ≥ 30 m) günstig ist, zeichnet sich durch die einander gegenüberliegende, gegeneinander gerichtete Anordnung der beiden Distanzscanner an den Seitenrändern des Regals aus.

Gemäß einer weiteren bevorzugten Weiterbildung der Erfindung umfaßt die Meldeeinrichtung zusätzlich eine Antenne zum Empfang und eine Auswerteschaltung zur Identifizierung spezifischer elektromagnetischer Schwingungen. Auf diese Weise läßt sich nicht nur ermitteln, in welches Fach des Regals hereingegriffen wurde. Zusätzlich läßt sich auch ermitteln, von wem in das Regal hineingegriffen wurde, insbesondere indem in der Montage arbeitende Personen z.B. im Bereich ihrer Handgelenke mit Transpondern bestückte identifizierende Armbänder tragen. Auf diese Weise läßt sich nicht nur überwachen, ob möglicherweise Unbefugte dem betreffenden überwachten Regal Bauteile entnehmen. Mindestens ebenso bedeutend ist der Vorteil, der sich daraus ergibt, daß ermittelt werden kann, welche Person sich gerade dem Regal nähert. Bei einer elektronisch gesteuerten und überwachten Fertigung kann für diese, der Montage eines bestimmten Erzeugnisses zugeordnete Person individuell ermittelt und angezeigt werden, welchem Fach sie das gerade zu montierende Bauteil entnehmen muß. Auch dies leistet einen beträchtlichen Beitrag zur Reduzierung von Montagefehlern und somit zur Kostensenkung.

Der mindestens eine optische Distanzscanner ist zweckmäßigerweise am oberen Rand des Regals angeordnet. Dies ermöglicht den Einsatz relativ preiswerter Distanzscanner, deren Meßbereich sich über 180° erstreckt, beispielsweise den Distanzscanner OSD3000-F20-M4 der Pepperl+Fuchs GmbH, Mannheim. Zudem ist die Gefahr einer Beschädigung und/oder Verschmutzung der Distanzscanner dann nur gering.

Jedem einzelnen Fach des erfindungsgemäßen Regals kann gemäß einer widerum anderen bevorzugten Weiterbildung der Erfindung ein Quittierungstaster zugeordnet sein, wobei ergänzend zweckmäßigerweise ein zentraler, für das gesamte Regal eingesetzter Barcodeleser vorgesehen ist. Diese Merkmale erweisen sich als besonders hilfreich bei der erstmaligen Beschickung und/oder einer Neubeschickung des erfindungsgemäßen Regals. Ist das Regal - einschl. der Fächerunterteilung - aufgebaut, so wird - vor oder nach dem Einspeichern der Koordinaten der überwachten Zugriffsöffnungen - jeweils ein Exemplar der Bauteile, mit denen ein bestimmtes Fach zu beschicken ist, an dem Barcodelaser identifiziert. Anschließend wird an dem Quittierungstaster bestätigt, welches der Fächer mit dem identifizierten Bauteil beschickt wurde. In entsprechender Weise kann umgekehrt die Identifizierung der einzelnen Bauteile mittels des Barcodelesers und das Quittieren des entsprechenden Faches des Regals auch erfolgen, nachdem das Regal vollständig beschickt wurde. Dies gilt namentlich dann, wenn die Beschickung des Regals von der Rückseite her erfolgt.

Bei einer anderen bevorzugten Weiterbildung der Erfindung ist das erfindungsgemäße Regal in der Weise in eine elektronisch gesteuerte und überwachte Fertigung integriert, daß auf einem Monitor die im Rahmen des Lehrprogramms (siehe oben) ermittelte Fächeraufteilung angezeigt wird. Hier kann die Zuordnung von Bauteilen, die mittels des Barcodelesers identifiziert worden sind, zu den einzelnen Fächern an dem Bildschirm erfolgen; den einzelnen Fächern zugeordneter Quittierungstaster bedarf es in diesem Falle nicht. Ebenso kann im Rahmen der elektronisch gesteuerten und überwachten Montage an dem Bildschirm angezeigt werden, welchem Fach, ggf. in Abhängigkeit von der sich dem Regal gerade nähernden Person (siehe oben), als nächstes ein Bauteil zu entnehmen ist. Dieses macht die Installation von den einzelnen Fächern zugeordneten optischen Signaleinrichtungen überflüssig, was einen weiteren Schritt zur nochmals gesteigerten Erhöhung der Flexibilität hinsichtlich der Fächeraufteilung darstellt.

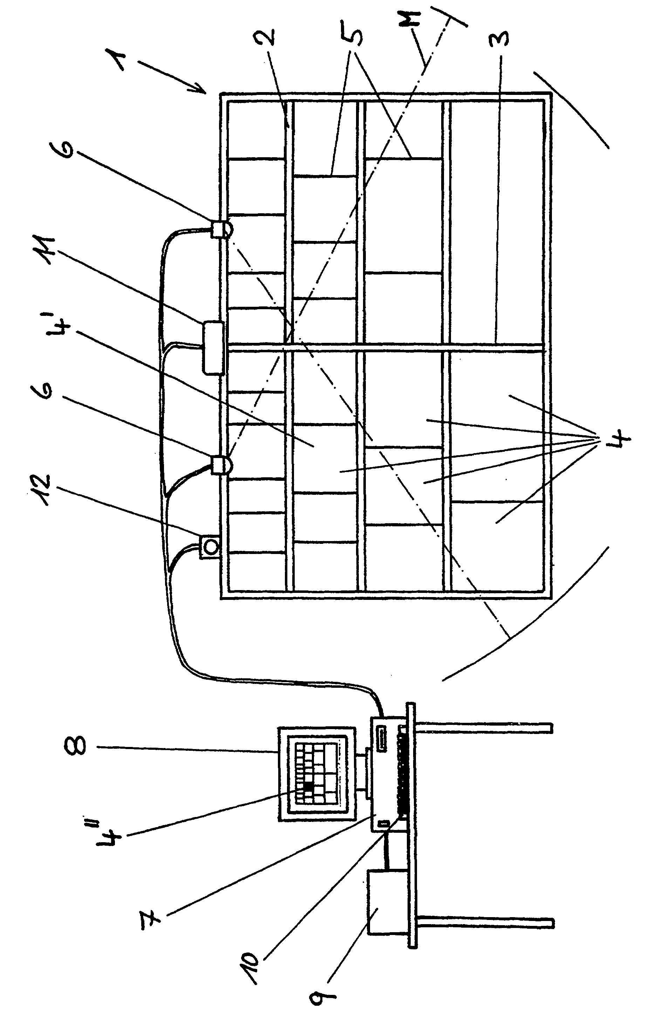

Im Folgenden wird ein Ausführungsbeispiel der Erfindung anhand der Zeichnung näher erläutert. Diese zeigt ein erfindungsgemäßes Regal, und zwar angeschlossen an eine elektronische Datenverarbeitungsanlage, welche der elektronischen Steuerung und Überwachung einer Fertigung dient.

Ein Regal 1 umfaßt mehrere fest installierte Böden 2 und eine Mittelwand 3. Innerhalb des durch die Wände des Regals, die Böden 2 und die Mittelwand 3 vorgegebenen Rahmens wird die Einteilung der Fächer 4 durch flexibel positionierbare Trennwände 5 vorgegeben.

Am oberen Rand des Regals sind zwei optische Distanzscanner 6 angeordnet, deren von dem jeweiligen Meßstrahl M mit einer Abtastfrequenz von 10 Hz überstrichener Meßbereich jeweils 180° bei einem Radius von 3 m beträgt und sich jeweils über die gesamte Stirnseite des Regals 1 erstreckt. Die beiden optischen Distanzscanner 6 stehen mit einer Datenverarbeitungsanlage 7 in Verbindung, welche zur elektronischen Steuerung und Überwachung eines Fertigungsablaufs eingesetzt ist.

In der Datenverarbeitungsanlage 7 ist ein Lernprogramm abgespeichert. Dieses läßt sich aufrufen, um die Koordinaten der in der Stirnseite des Regals angeordneten Zugriffsöffnungen der einzelnen Fächer 4 zu ermitteln und abzuspeichern. Dazu wird der Rand der Zugriffsöffnung eines jeden Faches einmal mittels eines Stabes vollständig abgefahren. Die beiden optischen Distanzscanner 6 detektieren fortlaufend (z.B. zehnmal pro Sekunde) die Position des Stabes und somit die Begrenzungen der Zugriffsöffnungen der einzelnen Fächer. Nach Abschluß des Lernprogramms erscheint auf dem Bildschirm 8 eine Wiedergabe des Regals 1 mit der ermittelten Fächeraufteilung.

Um das Regal zu beschicken, wird ein in der Datenverarbeitungsanlage abgespeichertes Beschickungsprogramm aufgerufen. Im Rahmen dieses Beschickungsprogramms werden die Bauteile, die in dem Regal bevorratet werden sollen, jeweils mittels eines an die Datenverarbeitungsanlage 7 angeschlossenen Barcodelesers 9 identifiziert; anschließend wird ein leeres Fach 4' des Regals 1 mit den entsprechenden Bauteilen beschickt, wobei das entsprechende Fach 4'' auf dem Bildschirm 8 markiert und die Beschickung dieses Faches mit dem identifizierten Bauteil bestätigt wird. Hierzu stehen übliche Eingabemittel wie Keyboard 10 und Mouse zur Verfügung.

Am oberen Rand des Regals 1 ist zwischen den beiden optischen Distanzscannern eine Rahmenantenne 11 angeordnet, die dem Empfang von elektromagnetischen Schwingungen dient, welche von angeregten Transpondern ausgesandt werden. Jede der Personen, die Zugangsberechtigung zu dem betreffend Regal haben, trägt an jedem Handgelenk ein Armband mit einem Transponder, der - bei Anregung - eine für diese Person charakteristische elektromagnetische Schwingung erzeugt. In der Datenverarbeitungsanlage 7 wird die von der Rahmenantenne 11 empfangene elektromagnetische Schwingung analysiert, d.h. einer bestimmten Person zugeordnet, wobei über diese Zuordnung zugleich eine Zuordnung zu einem definierten Montageschritt eines bestimmten Fertigungsprozesses, an dem die betreffende Person eingesetzt ist, erfolgt. Aufgrund dieser Zuordnung wird auf dem Bildschirm 8 ein genau definiertes Fach angezeigt, aus dem die betreffende Person das von ihr als nächstes zu montierende Bauteil zu entnehmen hat. Die beiden optischen Distanzscanner 6 ermitteln dann, ob die betreffende Person tatsächlich in das vorgegebene Fach greift oder nicht. Im zuletzt genannten Fall gibt eine an die elektronische Datenverarbeitungsanlage 7 angeschlossene akustische Signaleinrichtung 12 einen Warnton ab, und zugleich erscheint auf dem Bildschirm 8 eine Fehlermeldung. Wurde hingegen aus dem richtigen Fach das als nächstes zu montierende Bauteil entnommen, so wird dies in dem die Fertigung begleitenden Montageprotokoll abgespeichert, und das die Fertigung überwachende Programm schaltet auf den nächsten Montageschritt weiter.

Mittels der Datenverarbeitungsanlage 7 und der an sie angeschlossenen Rahmenantenne 11 läßt sich zugleich überwachen, ob Unberechtigte sich dem Regal 1 nähern. Auch in diesem Falle gibt die an die Datenverarbeitungsanlage angeschlossene akustische Signaleinrichtung 12 einen Alarmton ab.

Aus Vorstehendem ist ersichtlich, daß eine geänderte Aufgliederung des Regals unter Veränderung der Fächeraufteilung keinerlei bauliche Veränderungen an der Meldeeinrichtung zur Identifizierung des Zugriffs auf die einzelnen Fächer nach sich zieht. Dies ermöglicht die die vorliegende Erfindung auszeichnende mit minimalem Aufwand mögliche Veränderung der Fächeraufteilung.

Abwandlungen des in der Zeichnung dargestellten Ausführungsbeispiels können sich insbesondere darauf beziehen, daß die Anzeige desjenigen Faches, aus dem als nächstes ein Bauteil zu entnehmen ist, nicht auf dem Bildschirm 8 erfolgt sondern vielmehr mittels optischer Signaleinrichtungen, die im Bereich der Böden 2 angeordnet sein können. In gleicher Weise ist es möglich, daß das beim Beschicken des Regals vorgesehene Quittieren des jeweiligen Faches nicht an dem Bildschirm 8 erfolgt sondern vielmehr über Quittierungstaster, welche ebenfalls im Bereich der Böden 2 des Regals angeordnet sein können.

## Patentansprüche

1. Regal (1) mit einer Mehrzahl von Fächern (4), die jeweils eine auf der Stirnseite des Regals angeordnete Zugriffsöffnung aufweisen, wobei eine optische Sensoren umfassende Meldeeinrichtung zur Identifizierung des Zugriffs auf die einzelnen Fächer vorgesehen ist,
**dadurch gekennzeichnet,**
**daß** die Meldeeinrichtung mindestens einen optischen Distanzscanner (6), dessen Meßbereich sich vor der Stirnseite des Regals (1) über eine Mehrzahl von Zugriffsöffnungen erstreckt, und eine Auswerteschaltung mit einer Speichereinheit für die Koordinaten der überwachten Zugriffsöffnungen und einer Vergleichseinheit zum Vergleich der Koordinaten eines von dem optischen Distanzscanner (6) detektierten in das Meßfeld eingedrungenen Fremdkörpers einerseits und der Koordinaten der Zugriffsöffnungen andererseits umfaßt.

2. Regal nach Anspruch 1,
**dadurch gekennzeichnet,**
**daß** der Speichereinheit eine Lehrschaltung zugeordnet ist, mittels welcher die Koordinaten der Zugriffsöffnungen ermittelbar sind.

3. Regal nach einem der Ansprüche 1 oder 2,
**dadurch gekennzeichnet,**
**daß** genau zwei optische Distanzscanner (6) mit einander überlappenden Meßbereichen vorgesehen sind.

4. Regal nach einem der Ansprüche 1 bis 3,
**dadurch gekennzeichnet,**
**daß** die Meldeeinrichtung eine Antenne (11) zur Identifizierung spezifischer elektromagnetischer Schwingungen umfaßt.

5. Regal nach einem der Ansprüche 1 bis 4,
**dadurch gekennzeichnet,**
**daß** der mindestens eine optische Distanzscanner am oberen Rand des Regals (1) angeordnet ist.

6. Regal nach einem der Ansprüche 1 bis 4,
**dadurch gekennzeichnet,**
**daß** zwei optische Distanzscanner gegeneinander gerichtet an einander gegenüberliegenden Rändern des Regals angeordnet sind.

7. Regal nach einem der Ansprüche 1 bis 6,
**dadurch gekennzeichnet,**
**daß** jedem Fach (4) ein Quittierungstaster zugeordnet ist.

8. Regal nach einem der Ansprüche 1 bis 7,
**dadurch gekennzeichnet,**
**daß** ein Barcodeleser (9) vorgesehen ist, der an eine Datenverarbeitungsanlage (7) angeschlossen ist, mit welcher auch der mindestens eine optische Distanzscanner (6) in Verbindung steht.

## Claims

1. A shelving (1) comprising a number of compartments (4), each having an access opening on the front face of the said shelving, there being provided a detection unit comprising optical sensors, for identifying access to the various compartments, **characterised in that** the detection unit comprises at least one optical distance scanner (6), the measurement field of which before the front face of the shelving extends over a number of access openings and an evaluation circuit provided with a memory unit for comparing the co-ordinates of the monitored access openings and a comparison unit for comparing the co-ordinates of a foreign body which has entered the field of measurement and has been detected by the optical distance scanner (6) on the one hand with the co-ordinates of the access openings on the other.

2. A shelving according to Claim 1, **characterised in that** the memory unit has a teach-in circuit by means of which the co-ordinates of the access openings can be determined.

3. A shelving according to Claim 1 or 2, **characterised in that** exactly two distance scanners (6) have fields of measurement overlapping each other.

4. A shelving according to one of the Claims 1 to 3, **characterised in that** the detection unit has an aerial (11) to detect specific electromagnetic vibrations.

5. A shelving according to one of the Claims 1 to 4, **characterised in that** at least the one optical distance scanner is arranged at the top edge of the shelving.

6. A shelving according to one of the Claims 1 to 4, **characterised in that** two optical distance scanners are arranged opposite each other at shelving edges opposite each other.

7. A shelving according to one of the Claims 1 to 6, **characterised in that** each compartment (4) has an acknowledge push button.

8. A shelving according to one of the Claims 1 to 7, **characterised in that** a bar code reader (9) is connected to a data processing system (7) by means of which at least the one optical distance scanner (6) is connected.

## Revendications

1. Rayonnage (1) comportant plusieurs casiers (4) qui présentent chacun une ouverture d'accès disposée sur la face frontale du rayonnage, un dispositif de signalisation comprenant des capteurs optiques pour identifier l'accès aux différents casiers étant prévu, **caractérisé en ce que** le dispositif de signalisation comprend au moins un télé-scanneur (6) optique, dont la zone de mesure, devant la face frontale du rayonnage (1), s'étend sur plusieurs ouvertures d'accès, ainsi qu'un circuit de traitement avec une unité de mémoire pour les coordonnées des ouvertures d'accès surveillées et une unité comparatrice pour comparer les coordonnées d'un corps étranger entré dans le champ de mesure, détecté par le télé-scanneur (6) optique d'une part et les coordonnées des ouvertures d'accès d'autre part.

2. Rayonnage selon la revendication 1, **caractérisé en ce qu'**à l'unité de mémoire est associé un circuit d'apprentissage à l'aide duquel les coordonnées des ouvertures d'accès peuvent être déterminées.

3. Rayonnage selon la revendication 1 ou 2, **caractérisé en ce qu'**il est prévu exactement deux télé-scanneurs (6) optiques avec des zones de mesure qui se chevauchent mutuellement.

4. Rayonnage selon une des revendications 1 à 3, **caractérisé en ce que** le dispositif de signalisation comprend une antenne (11) pour l'identification d'ondes électromagnétiques spécifiques .

5. Rayonnage selon une des revendications 1 à 4, **caractérisé en ce que** le télé-scanneur optique, au nombre d'au moins un, est disposé sur le bord supérieur du rayonnage (1).

6. Rayonnage selon une des revendications 1 à 4, **caractérisé en ce que** deux télé-scanneurs optiques orientés en direction l'un de l'autre sont disposés sur des bords en vis-à-vis du rayonnage.

7. Rayonnage selon une des revendications 1 à 6, **caractérisé en ce qu'**à chaque casier (4) est associé un capteur de confirmation.

8. Rayonnage selon une des revendications 1 à 7, **caractérisé en ce qu'**il est prévu un lecteur de codes-barres (9) qui est connecté à un système de traitement de données (7) avec lequel le télé-scanneur (6) optique, au nombre d'au moins un, communique.
